# EUROPEAN PATENT SPECIFICATION

(11) **EP 1 720 797 B1**
(45) Date of publication and mention of the grant of the patent: **10.06.2015**
(21) Application number: 05711036.3
(22) Date of filing: 09.02.2005
(51) Int. Cl.: C01B 11/02, B01J 8/02, B01J 19/24, B01J 3/00

(54) **PROCESS FOR PRODUCTION OF CHLORINE DIOXIDE**
VERFAHREN ZUR HERSTELLUNG VON CHLORDIOXIDE
PROCÉDÉ DE PRODUCTION DE DIOXYDE DE CHLORE

(30) Priority: 23.02.2004 US 546199 P; 12.03.2004 EP 04445030
(43) Date of publication of application: 15.11.2006
(73) Proprietor: Akzo Nobel N.V., 6800 SB Arnhem (NL); Akzo Nobel Pulp and Performance Chemicals AB, 445 80 Bohus (SE)
(72) Inventor: CHARLES, Gary, Marietta, GA 30062 (US); BURKE, Michael, Cumming, GA 30040 (US)
(74) Representative: Chalk, Anthony John
(86) International application number: PCT/SE2005/000167
(87) International publication number: WO 2005/080262

(56) References cited:
- EP-A- 0 366 636
- WO-A-98/13295
- US-A- 3 816 077

## Description

### Field of the invention

The present invention relates to a process for producing chlorine dioxide from alkali metal chlorate, acid and a reducing agent.

### Background of the invention

Chlorine dioxide is used in various applications such as pulp bleaching, fat bleaching, water purification and removal of organic materials from industrial wastes. Since chlorine dioxide is not storage stable, it must be produced on-site.

Chlorine dioxide is usually produced by reacting alkali metal chlorate with a reducing agent in an aqueous reaction medium. Chlorine dioxide may be withdrawn from the reaction medium as a gas, as in the processes described by US patents 5091166, 5091167 and EP patent 612686. The chlorine dioxide gas can then be absorbed in water to form an aqueous solution thereof. These are preferably large-scale processes which require extensive process equipment and instrumentation.

For production of chlorine dioxide in small-scale units, such as for water purification applications or small bleaching plants, it is favourable not to separate chlorine dioxide from the reaction medium but to recover a chlorine dioxide containing solution directly from the reactor, optionally after dilution with water. Such processes are described in US patents 2833624, 4534952, 5895638, 6790427, in WO 00/76916, and in US patent applications Publ. No. 2004/0175322 and Publ. No. 2003/0031621, and have in recent years become commercial. The required process equipment and instrumentation is considerably less extensive than in the large-scale processes described above. However, there is still a need for further improvements.

In the small-scale processes it has been difficult to obtain solutions with such a high concentration of chlorine dioxide as desired for many applications, like recycle paper bleaching, bagasse bleaching, or small-scale pulp bleaching.

Another problem with the existing small-scale processes for chlorine dioxide production is that the chlorine dioxide concentration of the product may fluctuate depending on the chlorine dioxide production rate.

### Summary of the invention

It is an object of the invention to provide a process for the production of chlorine dioxide enabling direct production of chlorine dioxide in an aqueous solution with a high chlorine dioxide concentration.

It is another object of the invention to provide a process for the production of chlorine dioxide enabling direct production of chlorine dioxide in an aqueous solution with a chlorine dioxide concentration that can be kept constant independently of the chlorine dioxide production rate.

It is a further object of the invention to provide a novel chlorine dioxide solution of high concentration.

### Brief description of the invention

It has surprisingly been found possible to meet these objects by providing a process for continuously producing chlorine dioxide comprising the steps of continuously:
feeding to a reactor an acid, a reducing agent and alkali metal chlorate; reacting the alkali metal chlorate with the acid and the reducing agent to form a product stream containing chlorine dioxide and the alkali metal salt of the acid; and, bringing said product stream from the reactor to an absorption tower, where it is contacted with a flow of water to form an aqueous solution containing chlorine dioxide.

It has been found that by bringing the product stream to an absorption tower it is possible to obtain an aqueous solution with a high concentration of chlorine dioxide, preferably above about 3 g/liter, most preferably above about 4 g/liter, without first separating the chlorine dioxide gas from the reaction medium and then absorbing it into water. Any soluble species such as alkali metal salt of the acid and unreacted feed chemicals are also absorbed in the absorption tower. The flow rate of the water to the absorption tower, either chilled or not, is preferably adjustable so that the chlorine dioxide concentration can be kept constant independently of the production rate.

The aqueous solution obtained in the absorption tower can have a chlorine dioxide concentration of a wide range, for example from about 0.1 g/liter to about 12 g/liter, preferably from about 3 g/liter to about 10 g/liter, most preferably from about 4 g/liter to about 8 g/liter. The concentration of unreacted chlorate in the aqueous solution, which is dependent on the conversion degree, is suitably below about 0.33 moles/mole ClO₂, preferably below about 0.11 moles/mole ClO₂, most preferably below about 0.053 moles/mole ClO₂. The alkali metal salt concentration is dependent on the chlorine dioxide concentration and is suitably from about 0.74 mmoles/liter to about 59 mmoles/liter. The pH of the aqueous solution can vary within a wide range, partly dependent of the chlorine dioxide concentration, from about 0.1 to about 1, preferably from about 0.2 to about 0.8.

By the term absorption tower as used herein is meant any column or tower or the like where gas is contacted with a liquid flow to absorb soluble compounds therein. Gas and liquid preferably flow counter cumently. Inside the absorption tower are preferably placed devices such as plates or packing elements to provide interfacial surfaces where the mass transfer between the gas and the liquid can take place. Examples of useful packing elements include Raschig rings, Berl saddles, Intalox saddles etc. Examples of plates that can be used are sieve plates and bubble cap plates.

Preferably a device creating a subatmospheric pressure is connected to the absorption tower bringing the product stream, including any liquid, foam and gas therein, to flow into the absorption tower. The non-absorbed gas is withdrawn from the absorption tower by said device. Any commonly used devices such as fans, eductors etc. can be used, preferably an eductor. In the latter case the eductor is fed with motive water, which may be provided from a separate storage tank and a pump that only serves the eductor. The storage tank is preferably ventilated so that non-absorbed process gas can be removed.

The alkali metal chlorate is suitably fed to the reactor as an aqueous solution. The alkali metal may, for example, be sodium, potassium or mixtures thereof, of which sodium is most preferred. The acid is preferably a mineral acid such as sulfuric acid, hydrochloric acid, nitric acid, perchloric acid or mixtures thereof, of which sulfuric acid is most preferred. Several reducing agents can be used e.g. hydrogen peroxide, methanol, chloride ions etc., of which hydrogen peroxide is most preferred. In the latter case where hydrogen peroxide is used, the molar ratio H₂O₂ to ClO₃⁻ fed to the reactor is suitably from about 0.2:1 to about 2:1, preferably from about 0.5:1 to about 1.5:1, most preferably from about 0.5:1 to about 1:1. Alkali metal chlorate always contains some chloride as an impurity, but it is fully possible also to feed more chloride to the reactor, such as metal chloride or hydrochloric acid. However, in order to minimize the formation of chlorine it is preferred to keep the amount of chloride ions fed to the reactor low, suitably below about 1 mole %, preferably below about 0.1 mole %, more preferably less than about 0.05 mole %, most preferably less than about 0.02 mole % Cl⁻ of the ClO₃⁻.

In the case that sulfuric acid is used as a feed to the reactor, it preferably has a concentration from about 60 to about 98 wt%, most preferably from about 70 to about 85 wt% and preferably a temperature from about 0 to about 80°C, most preferably from about 20 to about 60°C, as it then may be possible to operate the process substantially adiabatically. Preferably from about 2 to about 7 kg H₂SO₄, most preferably from about 3 to about 5 kg H₂SO₄ is fed per kg ClO₂ produced. In order to use sulphuric acid of high concentration, a dilution and cooling scheme as described in US patent application Publ. No. 2004/0175322 is preferably applied.

In a particularly preferred embodiment alkali metal chlorate and hydrogen peroxide is fed to the reactor in the form of a premixed aqueous solution, for example a composition as described in WO 00176916. Such a composition may be an aqueous solution comprising from about 1 to about 6.5 moles/liter, preferably from about 3 to about 6 moles/liter of alkali metal chlorate, from about 1 to about 7 moles/liter, preferably from about 3 to about 5 moles/liter of hydrogen peroxide and at least one of a protective colloid, a radical scavenger or a phosphonic acid based complexing agent, wherein the pH of the aqueous solution suitably is from about 0.5 to about 4, preferably from about 1 to about 3.5, most preferably from about 1.5 to about 3. Preferably, at least one phosphonic acid based complexing agent is present, preferably in an amount from about 0.1 to about 5 mmoles/liter, most preferably from about 0.5 to about 3 mmoles/liter. If a protective colloid is present, its concentration is preferably from about 0.001 to about 0.5 moles/liter, most preferably from about 0.02 to about 0.05 moles/liter. If a radical scavenger is present, its concentration is preferably from about 0.01 to about 1 moles/liter, most preferably from about 0.02 to about 0.2 moles/liter. Particularly preferred compositions comprise at least one phosphonic acid based complexing agent selected from the group consisting of 1-hydroxyethylidene-1,1-diphosphonic acid, 1-aminoethane-1,1-diphosphonic acid, aminotri (methylenephosphonic acid), ethylene diamine tetra (methylenephosphonic acid), hexamethylene diamine tetra (methylenephosphonic acid), diethylenetriamine penta (methylenephosphonic acid), diethylenetriamine hexa (methylenephosphonic acid), 1-aminoalkane-1,1-diphosphonic acids (such as morpholinomethane diphosphonic acid, N,N-dimethyl aminodimethyl diphosphonic acid, aminomethyl diphosphonic acid), reaction products and salts thereof, preferably sodium salts. Useful protective colloids include tin compounds, such as alkali metal stannate, particularly sodium stannate (Na₂(Sn(OH)₆). Useful radical scavengers include pyridine carboxylic acids, such as 2,6-pyridine dicarboxylic acid. Suitably the amount of chloride ions is below about 300 mmoles/liter, preferably below about 50 mmoles/liter, more preferably below about 5 mmoles/liter, most preferably below about 0.5 mmoles/liter.

The reduction of alkali metal chlorate to chlorine dioxide results in the formation of a product stream in the reactor, normally comprising both liquid and foam, and containing chlorine dioxide, alkali metal salt of the acid and, in most cases, some remaining unreacted feed chemicals. If hydrogen peroxide is used as reducing agent the product stream also contains oxygen. Chlorine dioxide and oxygen may be present both as dissolved in the liquid and as gas bubbles. If sulphuric acid is used the alkali metal salt is a sulphate salt. It has been found possible to achieve a conversion degree of alkali metal chlorate to chlorine dioxide from about 75% to 100%, preferably from about 80 to 100%, most preferably from about 95 to 100%.

The temperature in the reactor is suitably maintained below the boiling point of the reactants and the product stream at the prevailing pressure, preferably from about 20 to about 80°C, most preferably from about 30 to about 60°C. The pressure maintained within the reactor is suitably slightly subatmospheric, preferably from about 30 to about 100 kPa absolute, most preferably from about 65 to about 95 kPa absolute.

The reactor may comprise one or several vessels, for example arranged vertically, horizontally or inclined. The reactants may be fed directly to the reactor or via a separate mixing device. Suitably the reactor is a preferably substantially tubular throughflow vessel or pipe, most preferably comprising means for mixing the reactants in a substantially uniform manner. Such means for mixing are described in e.g. US 6790427 and US patent application Publ. No. 2004/0175322.

The feeds, including acid, alkali metal chlorate and reducing agent, are preferably fed close to one end of the reactor and the product stream is preferably withdrawn at the other end of the reactor.

The length (in the main flow direction) of the reactor used is preferably from about 150 to about 1500 mm, most preferably from about 300 to about 900 mm. It has been found favourable to use a substantially tubular reactor with an inner diameter from about 25 to about 300 mm, preferably from about 50 to about 150 mm. It is particularly favourable to use a substantially tubular reactor having a preferred ratio of the length to the inner diameter from about 12:1 to about 1:1, most preferably from about 8:1 to about 4:1. A suitable average residence time in the reactor is in most cases from about 1 to about 60 seconds, preferably from about 3 to about 20 seconds.

The process of the invention is particularly suitable for production of chlorine dioxide in small-scale, for example from about 0.5 to about 200kg/hr, preferably from about 10 to about 150 kg/hr. A typical small-scale production unit normally includes only one reactor, although it is possible to arrange several, for example up to about 15 or more reactors in parallel, for example as a bundle of tubes. If more than one reactor is used then it is optional if every reactor is connected to a separate absorption tower and a separate device creating a subatmospheric pressure or if all reactors are connected to one single absorption tower and one device creating a subatmospheric pressure.

The invention further relates to a novel aqueous solution containing chlorine dioxide that can be produced by the process as described above. The chlorine dioxide concentration in the novel aqueous solution is from about 4 to about 12 g/liter, preferably from about 4 to about 8 g/liter, most preferably from about 4 g/liter to about 6 g/liter. The pH of the novel aqueous chlorine dioxide solution is from about 0.1 to about 1, preferably from about 0.2 to about 0.8. The sulphate concentration in the aqueous solution is from about 1.1 moles/mole ClO₂ to about 3.8 moles/mole ClO₂, preferably from about 1.1 moles/mole ClO₂ to about 3.2 moles/mole ClO₂. The residual chlorate concentration in the aqueous solution is suitably below about 0.33 moles/mole ClO₂, preferably below about 0.11 moles/mole ClO₂, most preferably below about 0.053 moles/mole ClO₂.

An apparatus is provided for producing chlorine dioxide according to the above described process. The apparatus comprises a reactor provided with one or more feed lines for alkali metal chlorate, hydrogen peroxide and acid, the reactor being connected to an absorption tower. The apparatus further comprises a device for creating a subatmospheric pressure in the reactor and the absorption tower. Such a device is preferably an eductor fed with motive water.

The process of the invention makes it possible to produce an aqueous solution with a high chlorine dioxide concentration, i.e. above about 3 g/liter, preferably above about 4 g/liter, with equipment that is simple and easy to operate.

Preferred designs of apparatus are apparent from the above description of the process and the following description referring to the drawings. The invention is, however, not limited to the embodiments shown in the drawings and encompasses many other variants within the scope of the claims.

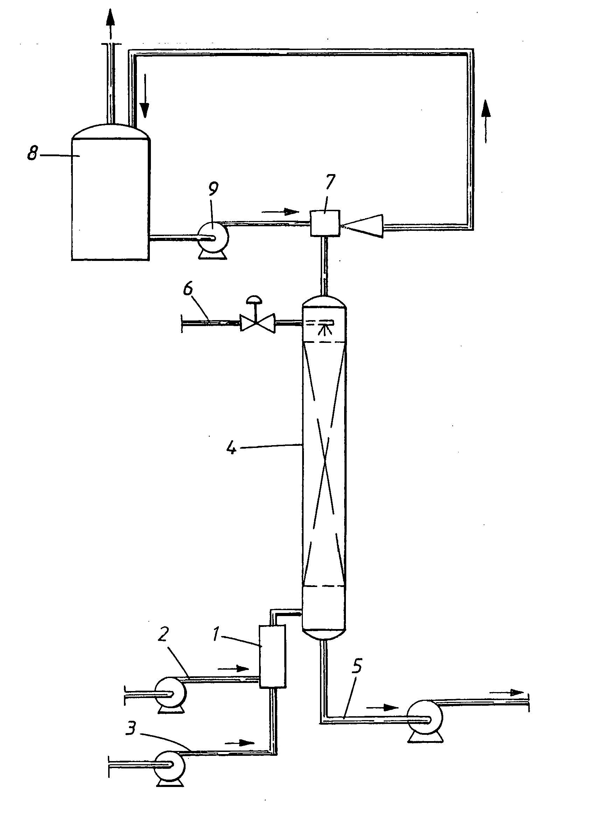

### Brief Description of the Drawing

The Figure shows a schematic process diagram for an embodiment of the present invention.

### Detailed Description of the Drawing

Referring to the Fig., a preferably substantially tubular through-flow reactor 1 is supplied with sulphuric acid through a feed line 2 and a pre-mixed aqueous solution of sodium chlorate and hydrogen peroxide through a feed line 3. In the reactor 1 the feed streams are mixed and reacted to form a product stream of liquid, foam and gas comprising chlorine dioxide, oxygen, sodium sulphate and some remaining sulphuric acid and sodium chlorate. The product stream is brought to the lower end of an absorption tower 4 which is fed with water at the top 6. The chlorine dioxide is absorbed in the water to form a product solution that is withdrawn from the absorption tower at the bottom 5.

To create a subatmospheric pressure in the reactor 1 and the absorption tower 4 an eductor 7 is connected to the absorption tower. The eductor 7 is fed with motive water that is recirculated through a storage tank 8 and then pumped through the eductor by a pump 9.

The motive water storage tank is ventilated so that any product gas not absorbed in the absorption tower, such as oxygen, can be removed.

## Claims

1. A process for continuously producing chlorine dioxide comprising the steps of continuously: feeding to a reactor an acid, a reducing agent and alkali metal chlorate; reacting the alkali metal chlorate with the acid and the reducing agent to form a product stream containing chlorine dioxide and the alkali metal salt of the acid; and bringing said product stream from the reactor to an absorption tower, where it is contacted with a flow of water to form an aqueous solution containing chlorine dioxide.

2. A process as claimed in claim 1, wherein the aqueous solution containing chlorine dioxide has a concentration thereof from about 4 to about 12 g/l.

3. A process as claimed in any of the claims 1 to 2, wherein the ClO₂ concentration in the aqueous solution is kept substantially constant independently of the chlorine dioxide production rate by adjusting the water flow to the absorption tower.

4. A process as claimed in any of the claims 1 to 3, wherein the non absorbed gas from the absorption tower is withdrawn by an eductor, creating a subatmospheric pressure in the reactor and the absorption tower.

5. A process as claimed in any of the claims 1 to 4, wherein the reactor is operated at a pressure from about 30 to about 100 kPa.

6. A process as claimed in any of the claims 1 to 5, wherein the acid is sulphuric acid.

7. A process as claimed in any of the claims 1 to 6, wherein the reducing agent is hydrogen peroxide.

8. A process as claimed in claim 7, wherein the alkali metal chlorate and hydrogen peroxide is fed to the reactor in the form of a premixed aqueous solution.

9. A process as claimed in any of the claims 1 to 8, wherein the reactor is a throughflow vessel or a pipe.

10. A process as claimed in any of the claims 8 or 9, wherein the acid, the alkali metal chlorate and the reducing agent are fed close to one end of the reactor while the product stream is withdrawn at the other end of the reactor.

11. A process as claimed in any of the claims 1 to 10, wherein the product stream from the reactor containing chlorine dioxide comprises liquid, foam and gas.

12. An aqueous solution comprising from about 4 to about 12 g/liter of chlorine dioxide and from about 1.1 to about 3.8 moles of sulfate per mole ClO₂, wherein the pH of said aqueous solution is from about 0.1 to about 1.

## Patentansprüche

1. Verfahren für die kontinuierliche Herstellung von Chlordioxid, das kontinuierlich die folgenden Schritte umfasst: Einspeisen einer Säure, eines Reduktionsmittels und von Alkalimetallchlorat in einen Reaktor; Reagieren des Alkalimetallchlorats mit der Säure und dem Reduktionsmittel, um einen Produktstrom zu bilden, der Chlordioxid und das Alkalimetallsalz der Säure enthält; und Überführen des Produktstroms vom Reaktor zu einem Absorptionsturm, wo er mit einem Wasserfluss kontaktiert wird, um eine wässrige Lösung zu bilden, die Chlordioxid enthält.

2. Verfahren nach Anspruch 1, wobei die wässrige Lösung, die Chlordioxid enthält, eine diesbezügliche Konzentration von ungefähr 4 bis ungefähr 12 g/l aufweist.

3. Verfahren nach einem beliebigen der Ansprüche 1 bis 2, wobei die ClO₂-Konzentration in der wässrigen Lösung unabhängig von der Herstellungsrate des Chlordioxids durch Anpassung des Wasserflusses zum Absorptionsturm im Wesentlichen konstant gehalten wird.

4. Verfahren nach einem beliebigen der Ansprüche 1 bis 3, wobei das nicht absorbierte Gas durch einen Ejektor aus dem Absorptionsturm entzogen wird, wodurch im Reaktor und im Absorptionsturm ein Unterdruck geschaffen wird.

5. Verfahren nach einem beliebigen der Ansprüche 1 bis 4, wobei der Reaktor bei einem Druck von ungefähr 30 bis ungefähr 100 kPa betrieben wird.

6. Verfahren nach einem beliebigen der Ansprüche 1 bis 5, wobei die Säure Schwefelsäure ist.

7. Verfahren nach einem beliebigen der Ansprüche 1 bis 6, wobei das Reduktionsmittel Wasserstoffperoxid ist.

8. Verfahren nach Anspruch 7, wobei das Alkalimetallchlorat und das Wasserstoffperoxid in den Reaktor in Form einer vorgemischten wässrigen Lösung eingespeist werden.

9. Verfahren nach einem beliebigen der Ansprüche 1 bis 8, wobei der Reaktor ein Durchflussbehälter oder ein Rohr ist.

10. Verfahren nach einem beliebigen der Ansprüche 8 oder 9, wobei die Säure, das Alkalimetallchlorat und das Reduktionsmittel in der Nähe eines Endes des Reaktors eingespeist werden, während der Produktstrom am anderen Ende des Reaktors entzogen wird.

11. Verfahren nach einem beliebigen der Ansprüche 1 bis 10, wobei der Produktstrom vom Reaktor, der Chlordioxid enthält, Flüssigkeit, Schaum und Gas umfasst.

12. Wässrige Lösung, die ungefähr 4 bis ungefähr 12 g/Liter Chlordioxid und ungefähr 1,1 bis ungefähr 3,8 Mol Sulfat pro Mol ClO₂ umfasst, wobei der pH-Wert der wässrigen Lösung bei ungefähr 0,1 bis ungefähr 1 liegt.

## Revendications

1. Procédé de production continue de dioxyde de chlore comprenant les phases consistant, de manière continue :
à injecter un acide, un agent réducteur et un chlorate de métal alcalin dans un réacteur;
à mettre en réaction le chlorate de métal alcalin avec l'acide et l'agent réducteur pour former un courant de produit contenant du dioxyde de chlore et le sel de métal alcalin de l'acide;
et à amener ledit courant de produit depuis le réacteur vers une tour d'absorption, pour entrer en contact avec un écoulement d'eau pour former une solution aqueuse contenant le dioxyde de chlore.

2. Procédé selon la revendication 1, où la solution aqueuse contenant du dioxyde de chlore a une concentration de celui-ci comprise entre 4 et 12 g/l environ.

3. Procédé selon l'une des revendications 1 à 2, où la concentration de ClO₂ dans la solution aqueuse est maintenue sensiblement constante, indépendamment du taux de production de dioxyde de chlore en ajustant l'écoulement d'eau vers la tour d'absorption.

4. Procédé selon l'une des revendications 1 à 3, où le gaz non absorbé en provenant de la tour d'absorption est retiré par un éducteur, créant une pression subatmosphérique dans le réacteur et la tour d'absorption.

5. Procédé selon l'une des revendications 1 à 4, où le réacteur est exploité à une pression comprise entre 30 et 100 kPa environ.

6. Procédé selon l'une des revendications 1 à 5, où l'acide est de l'acide sulfurique.

7. Procédé selon l'une des revendications 1 à 6, où l'agent réducteur est le peroxyde d'hydrogène.

8. Procédé selon la revendication 7, où l'on injecte du chlorate de métal alcalin et du peroxyde d'hydrogène dans le réacteur sous forme de solution aqueuse prémélangée.

9. Procédé selon l'une des revendications 1 à 8, où le réacteur est une cuve à circulation continue ou un tuyau.

10. Procédé selon l'une des revendications 8 ou 9, où l'on injecte l'acide, le chlorate de métal alcalin et l'agent réducteur près d'une extrémité du réacteur tandis que l'on retire le courant de produit à l'autre extrémité du réacteur.

11. Procédé selon l'une des revendications 1 à 10, où le courant de produit provenant du réacteur et contenant du dioxyde de chlore comprend du liquide, de la mousse et du gaz.

12. Solution aqueuse comprenant entre 4 et 12 g/litre environ de dioxyde de chlore et entre 1,1 et 3,8 moles de sulfate par mole de ClO₂ environ, où le pH de ladite solution aqueuse est compris entre 0,1 et 1 environ.
